# FASCICULE DE BREVET EUROPEEN

(11) **EP 4 005 095 B1**
(45) Date de publication et mention de la délivrance du brevet: **30.08.2023**
(21) Numéro de dépôt: 20739718.3
(22) Date de dépôt: 17.07.2020
(51) Int. Cl.: H04B 1/04

(54) **DISPOSITIF D'ÉMISSION RADIOFRÉQUENCE ET PROCÉDÉ DE COMMANDE D'UN TEL DISPOSITIF**
FUNKFREQUENZÜBERTRAGUNGSVORRICHTUNG UND VERFAHREN ZUR STEUERUNG SOLCH EINER VORRICHTUNG
RADIOFREQUENCY-TRANSMITTING DEVICE AND METHOD FOR CONTROLLING SUCH A DEVICE

(30) Priorité: 30.07.2019 FR 1908690
(43) Date de publication de la demande: 01.06.2022
(73) Titulaire: Commissariat à l'Energie Atomique et aux Energies Alternatives, 75015 Paris (FR)
(72) Inventeur: JANY, Clément, 38054 GRENOBLE CEDEX 9 (FR); DURR, Michel, 38054 GRENOBLE CEDEX 9 (FR); HAMEAU, Frédéric, 38054 GRENOBLE CEDEX 9 (FR)
(74) Mandataire: Cabinet Beaumont
(86) Numéro de dépôt international: PCT/EP2020/070263
(87) Numéro de publication internationale: WO 2021/018631

(56) Documents cités:
- EP-A2- 2 993 811
- WO-A1-00/03479
- JP-A- 2016 122 895
- US-A1- 2015 139 352

## Description

La présente demande de brevet revendique la priorité de la demande de brevet français FR19/08690.

### Domaine technique

La présente description concerne de façon générale les dispositifs d'émission radiofréquence. Elle vise plus particulièrement un dispositif d'émission radiofréquence comportant une pluralité de cellules élémentaires d'émission, et un procédé de commande d'un tel dispositif.

### Technique antérieure

On a déjà proposé des dispositifs comportant une pluralité de cellules élémentaires d'émission radiofréquence formant un réseau d'émission radiofréquence, par exemple pour des applications de communication, des applications radar, ou encore des applications d'imagerie. Chaque cellule élémentaire d'émission comprend classiquement un circuit d'émission et une antenne connectée à une borne de sortie du circuit d'émission.

Il serait souhaitable d'améliorer au moins en partie un ou plusieurs aspects des dispositifs d'émission radiofréquence connus.

Le document US2015/139352 décrit un exemple de dispositif d'antenne à réseau transmetteur phasé.

### Résumé de l'invention

Pour cela, un mode de réalisation prévoit un dispositif d'émission radiofréquence comportant une pluralité de cellules élémentaires comportant chacune un circuit d'émission et une antenne connectée à une borne de sortie du circuit d'émission, chaque circuit d'émission comportant un détecteur de puissance spécifique à la cellule, ayant un noeud d'entrée relié à la borne de sortie du circuit d'émission de la cellule, et un noeud de sortie spécifique à la cellule, le dispositif comportant en outre un circuit de contrôle configuré pour, lors d'une phase de fonctionnement, mettre en oeuvre les étapes suivantes :
a) simultanément activer en émission une première cellule de la pluralité de cellules, désactiver en émission une deuxième cellule de la pluralité de cellules, et lire sur un noeud de sortie du détecteur de puissance de la deuxième cellule un signal représentatif d'une puissance radiofréquence reçue sur la borne de sortie de la deuxième cellule via l'antenne de la deuxième cellule ; et
b) déduire du signal lu à l'étape a) une information quant à l'état du dispositif ou de son environnement, dans lequel ladite information déduite à l'étape b) caractérise un transfert d'énergie entre les antennes des première et deuxième cellules.

Selon un mode de réalisation, les noeuds de sortie des détecteurs de puissance des différentes cellules élémentaires sont isolés électriquement les uns des autres.

Selon un mode de réalisation, le circuit de contrôle est configuré pour, à l'étape b), comparer le signal lu à l'étape a) à un seuil prédéterminé.

Selon un mode de réalisation, le circuit de contrôle est configuré pour mettre en oeuvre, après l'étape a), l'étape suivante :
a') simultanément activer en émission la deuxième cellule, désactiver en émission la première cellule, et lire sur le noeud de sortie du détecteur de puissance de la première cellule un signal représentatif d'une puissance radiofréquence reçue sur la borne de sortie de la première cellule via l'antenne de la première cellule.

Selon un mode de réalisation, le circuit de contrôle est en outre configuré pour, après l'étape a'), comparer le signal lu à l'étape a') au signal lu à l'étape a).

Selon un mode de réalisation, le circuit de contrôle est configuré pour répéter les étapes a) et b) pour toutes les combinaisons de deux cellules de ladite pluralité de cellules.

Selon un mode de réalisation, dans chaque cellule, le détecteur de puissance est adapté à fournir sur son noeud de sortie un signal représentatif de la moyenne du carré de la tension présente sur la borne de sortie du circuit d'émission de la cellule.

Selon un mode de réalisation, dans chaque cellule, le circuit d'émission comprend un générateur de signaux radiofréquence et un amplificateur reliant un noeud de sortie du générateur à la borne de sortie du circuit d'émission.

Selon un mode de réalisation, dans chaque cellule, le générateur de signaux radiofréquence comprend un oscillateur local et un mélangeur adapté à moduler un signal de sortie de l'oscillateur local.

Selon un mode de réalisation, les cellules de la pluralité de cellules sont montées sur une même carte de circuit imprimé.

Un autre mode de réalisation prévoit un procédé de commande d'un dispositif d'émission radiofréquence comportant une pluralité de cellules élémentaires comportant chacune un circuit d'émission et une antenne connectée à une borne de sortie du circuit d'émission, chaque circuit d'émission comportant un détecteur de puissance spécifique à la cellule ayant un noeud d'entrée relié à la borne de sortie du circuit d'émission de la cellule, et un noeud de sortie spécifique à la cellule, le procédé comportant les étapes suivantes :
a) simultanément activer en émission une première cellule de ladite pluralité de cellules, désactiver en émission une deuxième cellule de ladite pluralité de cellules, et lire sur un noeud de sortie du détecteur de puissance de la deuxième cellule un signal représentatif d'une puissance radiofréquence reçue par la borne de sortie de la deuxième cellule via l'antenne de la deuxième cellule ; et
b) déduire du signal lu à l'étape a) une information quant à l'état du dispositif ou de son enviroment, dans lequel ladite information déduite à l'étape b) caractérise un transfert d'énergie entre les antennes des première et deuxième cellules.

Selon un mode de réalisation, les noeuds de sortie des détecteurs de puissance des différentes cellules élémentaires sont isolés électriquement les uns des autres

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique simplifié d'un exemple d'un dispositif d'émission radiofréquence selon un mode de réalisation ;
la figure 2 illustre un exemple d'un procédé de commande d'un dispositif d'émission radiofréquence selon un mode de réalisation ; et
la figure 3 illustre un exemple d'utilisation d'un dispositif d'émission radiofréquence.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des divers éléments des cellules élémentaires d'émission des dispositifs décrits n'a pas été détaillée, la réalisation de ces éléments étant à la portée de l'homme du métier à partir des indications de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

Par signaux ou ondes radiofréquence, on entend ici des signaux ou ondes radio dont le spectre est compris entre 3 kHz et 300 GHz. Les modes de réalisation décrits sont tout particulièrement avantageux pour des dispositifs destinés à émettre à des longueurs d'ondes millimétriques, par exemple à des fréquences comprises entre 30 et 300 GHz.

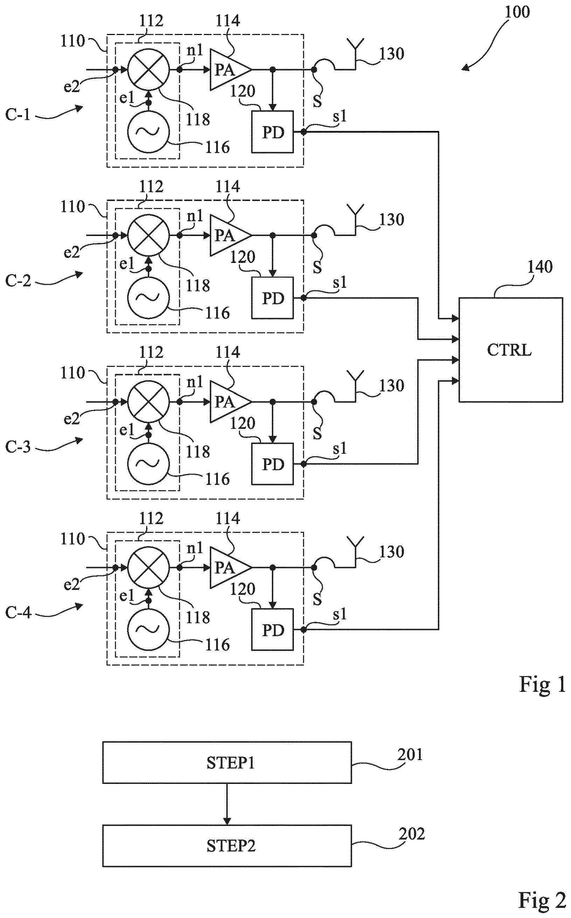

La figure 1 est un schéma électrique simplifié d'un exemple d'un dispositif d'émission radiofréquence 100 selon un mode de réalisation. Le dispositif 100 de la figure 1 est par exemple destiné à être utilisé pour irradier localement la peau d'un utilisateur, à des fins médicales ou de confort.

Le dispositif 100 de la figure 1 comprend n cellules élémentaires d'émission C_i, avec n entier supérieur ou égal à 2 et i entier allant de 1 à n. Dans l'exemple de la figure 1, le dispositif 100 comprend n=4 cellules élémentaires d'émission C_1, C_2, C_3 et C_4. Les n cellules C_i du dispositif 100 sont par exemple identiques (aux dispersions de fabrication près).

Chaque cellule C_i comprend un circuit d'émission 110 et une antenne 130 connectée à une borne de sortie S du circuit d'émission 110. Chaque circuit d'émission 110 est par exemple intégré dans une puce semiconductrice élémentaire spécifique à la cellule, à laquelle est connectée l'antenne 130 de la cellule. Les n cellules C_i sont par exemple montées sur une même carte de circuit imprimé. Dans cet exemple, chaque circuit d'émission 110 comprend un générateur de signaux radiofréquence 112 adapté à fournir un signal radiofréquence sur un noeud de sortie n1. Chaque circuit 110 comprend en outre un amplificateur de puissance 114 (PA) ayant un noeud d'entrée relié, par exemple connecté, au noeud de sortie n1 du générateur 112, et un noeud de sortie relié, par exemple connecté, à la borne de sortie S du circuit 110. L'amplificateur 114 est adapté à amplifier le signal radiofréquence fourni par le générateur 112 en vue de son émission par l'antenne 130. Dans chaque circuit d'émission 110, le générateur 112 comprend au moins un oscillateur local 116 fournissant un signal oscillant à une fréquence de l'ordre de la fréquence centrale d'émission de la cellule, par exemple une fréquence comprise entre 30 et 300 GHz, par exemple une fréquence de l'ordre de 60 GHz. Chaque générateur 112 peut en outre comprendre un mélangeur 118 adapté à moduler le signal fourni par l'oscillateur 116. Plus particulièrement, dans l'exemple représenté, le mélangeur 118 comprend un noeud d'entrée e1 relié, par exemple connecté, à un noeud de sortie de l'oscillateur 116, et un noeud de sortie relié, par exemple connecté, au noeud de sortie n1 du générateur 112. Dans l'exemple de la figure 1, le mélangeur 118 comprend en outre un noeud d'entrée e2 destiné à recevoir un signal de modulation. Le signal radiofréquence fourni en sortie du mélangeur 118 correspond alors au signal fourni par l'oscillateur local 116, modulé par le signal appliqué sur l'entrée e2 du mélangeur 118. A titre d'exemple, le signal de modulation appliqué sur le noeud e2 est un signal périodique binaire ou signal en créneau, le mélangeur 118 transmettant le signal de sortie de l'oscillateur 116 sensiblement à l'identique sur le noeud n1 lorsque le signal de modulation est à un premier état, par exemple un état haut, et ne fournissant aucun signal sur le noeud n1 lorsque le signal de modulation est à un deuxième état, par exemple un état bas. Autrement dit, dans cet exemple, le mélangeur 118 se comporte comme un interrupteur commandé par le signal de modulation appliqué sur le noeud e2. A titre d'exemple, la fréquence du signal de modulation est comprise entre 100 et 10000 Hz, par exemple de l'ordre de 1000 Hz. Le rapport cyclique du signal de modulation peut être réglé pour contrôler la puissance moyenne du signal radiofréquence délivré par la cellule C_i.

Dans cet exemple, chaque circuit d'émission 110 comprend en outre un détecteur de puissance 120 (PD) spécifique ayant un noeud d'entrée relié, par exemple connecté, à la borne de sortie S du circuit 110. Le détecteur de puissance 120 est adapté à fournir, sur un noeud de sortie s1, un signal (par exemple une tension continue) représentatif de la puissance du signal radiofréquence délivré par le circuit 110 sur sa borne de sortie S. Par spécifique, on entend ici que les détecteurs de puissance 120 des différentes cellules sont distincts les uns des autres et ont des noeuds de sortie respectif isolés les uns des autres.

A titre d'exemple, le circuit 120 est configuré pour fournir sur son noeud s1 un signal basé uniquement sur une mesure de la tension présente sur la borne de sortie S du circuit 110. A titre d'exemple, le circuit 120 est configuré pour fournir sur son noeud s1 un signal représentatif de l'amplitude de l'enveloppe de la tension présente sur la borne de sortie S du circuit 110. A titre d'exemple, le circuit 120 est configuré pour fournir sur son noeud s1 un signal représentatif de la moyenne du carré de la tension présente sur la borne de sortie S du circuit 110.

Le circuit détecteur de puissance 120 permet de connaître la puissance du signal radiofréquence effectivement émis vers l'extérieur de la cellule, qui peut varier de façon significative en fonction de l'environnement de la cellule. En fonctionnement normal, une rétroaction peut être prévue pour adapter une consigne de puissance d'émission du circuit 110 de la cellule, en fonction de la mesure de puissance fournie par le circuit détecteur de puissance 120 de la cellule. De plus ou de façon alternative, dans chaque cellule C_i, le circuit détecteur de puissance 120 peut être utilisé lors d'une phase de test de la cellule, pour détecter une éventuelle défaillance de la cellule, par exemple un défaut d'adaptation d'impédance entre le circuit d'émission 110 et l'antenne 130 de la cellule, ou un défaut de connexion entre le circuit d'émission 110 et l'antenne 130 de la cellule.

Dans l'exemple de la figure 1, le dispositif 100 comprend en outre un circuit de contrôle 140 (CTRL). Le circuit 140 peut comprendre un microcontrôleur. A titre de variante, le circuit de contrôle 140 est entièrement analogique. Dans l'exemple représenté, le circuit de contrôle 140 comprend n bornes d'entrée reliées, par exemple connectées, respectivement aux n noeuds de sortie s1 des circuits détecteurs de puissance 120 des n cellules C_i du dispositif. Le circuit de contrôle 140 est adapté à lire et traiter les signaux de sortie des détecteurs de puissance 120 des cellules C_i. Le circuit de contrôle 140 est en outre adapté à commander l'activation/la désactivation en émission des cellules C_i et/ou à contrôler la puissance moyenne d'émission des cellules C_i. A titre d'exemple, le circuit de contrôle 140 peut être adapté à fournir, via n bornes de sortie distinctes, non détaillées sur la figure, les n signaux de modulation appliqués sur les bornes d'entrée e2 des mélangeurs 118 des n cellules C_i du dispositif.

En fonctionnement normal, le dispositif 100 peut être commandé, par l'intermédiaire du circuit de contrôle 140, de façon que les n cellules élémentaires d'émission C_i du dispositif émettent simultanément des signaux radiofréquence.

Selon un aspect d'un mode de réalisation, le circuit de contrôle 140 est en outre adapté pour, lors d'une phase de test, simultanément :
- activer en émission une première cellule élémentaire de l'ensemble de n cellules C_i ;
- désactiver en émission une deuxième cellule élémentaire de l'ensemble de n cellules C_i ; et
- lire en sortie du détecteur de puissance 120 de la deuxième cellule un signal représentatif de la puissance radiofréquence reçue sur la borne de sortie S de la deuxième cellule.

Lorsque la première cellule émet un signal radiofréquence, une partie de la puissance de ce signal est transmise, par couplage, à l'antenne 130 de la deuxième cellule. La deuxième cellule étant désactivée en émission, c'est-à-dire commandée de façon que son circuit d'émission 110 ne fournisse aucun signal radiofréquence sur sa borne de sortie S, la puissance radiofréquence détectée sur la borne S de la deuxième cellule par son détecteur de puissance 120 est représentative de la puissance radiofréquence reçue via l'antenne 130 de la deuxième cellule, en provenance de la première cellule. On prévoit ici d'utiliser ce chemin de couplage inter-cellules pour tester l'état du dispositif 100 ou de son environnement. Autrement dit, on prévoit d'utiliser le détecteur de puissance 120 d'une cellule inactive en émission comme récepteur d'un signal émis par une cellule active en émission, pour tester l'état du dispositif 100 ou de son environnement. A titre d'exemple, le signal de sortie du détecteur de puissance 120 de la cellule inactive en émission est comparé à un ou plusieurs seuils pour déterminer une information quant à l'état du dispositif ou de son environnement.

Le mode de fonctionnement susmentionné peut par exemple être utilisé pour tester le fonctionnement des cellules élémentaires du dispositif et notamment l'état des connexions entre les circuits d'émission 110 et les antennes 130 des cellules du dispositif. A titre d'exemple, on peut prévoir, lors d'une phase de test, d'activer en émission une unique première cellule du dispositif, et de comparer à un seuil prédéterminé le signal de sortie du détecteur de puissance 120 d'une deuxième cellule du dispositif, distincte de la première cellule. Si le signal de sortie du détecteur de puissance 120 de la deuxième cellule est supérieur au seuil, on peut en déduire que les première et deuxième cellules sont fonctionnelles, et notamment que la qualité des connexions entre le circuit d'émission 110 et l'antenne 130 de chacune des première et deuxième cellules est satisfaisante. Dans le cas contraire, on peut en déduire qu'au moins l'une des première et deuxième cellules présente une défaillance, par exemple un défaut de connexion entre le circuit d'émission 110 et l'antenne 130 de la cellule. Une alerte peut alors par exemple être transmise à un utilisateur du dispositif, par le biais d'une interface utilisateur non détaillée. Le test peut ensuite être répété séquentiellement pour une ou plusieurs autres paires de cellules du dispositif, par exemple pour toutes les combinaisons de deux cellules du dispositif, de façon à tester l'ensemble des cellules du dispositif, et, le cas échéant, localiser les cellules défaillantes.

A titre de variante, le mode de fonctionnement susmentionné peut être utilisé pour déterminer des informations quant à l'environnement du dispositif 100, par exemple des propriétés du milieu environnant le dispositif 100. En effet, la puissance détectée par le détecteur de puissance 120 de la cellule inactive en émission, ou cellule réceptrice, dépend des propriétés du canal de transmission séparant l'antenne de la cellule réceptrice de l'antenne de la cellule active en émission, ou cellule émettrice, et, plus généralement, des propriétés de l'environnement immédiat des deux antennes. A titre d'exemple, dans le cas d'un dispositif destiné à être placé à même la peau d'un utilisateur, le mode de fonctionnement susmentionné peut être utilisé pour déterminer des informations quant au taux d'humidité de la peau, informations qui peuvent par exemple être utilisées pour estimer l'état émotionnel de l'utilisateur et adapter en conséquence la puissance radiofréquence émise par le dispositif.

Pour améliorer la précision des informations déterminées, des mesures différentielles peuvent être mises en oeuvre. Par exemple, pour chaque paire de cellules testée, on peut prévoir de réaliser une première mesure en activant simultanément en émission une première cellule de la paire et en réception la deuxième cellule de la paire, puis une deuxième mesure en activant simultanément en émission la deuxième cellule de la paire et en réception la première cellule de la paire. Les deux mesures peuvent alors être comparées pour affiner la précision des information déterminées.

En généralisant la mesure différentielle pour des systèmes comportant un grand nombre de cellules élémentaires, par exemple au moins 9 cellules élémentaires, par exemple agencées en matrice selon des rangées et des colonnes, une cartographie des transmissions pour l'ensemble des couples de cellules du dispositif peut être établie. Un traitement de ces données de transmission peut être mis en oeuvre par le circuit de contrôle 140, par exemple par un procédé de tomographie, de façon à fournir des informations sur l'état de l'environnement du dispositif en plusieurs points, ou la localisation de défauts dans le dispositif.

A titre de variante, on peut prévoir d'activer simultanément plusieurs cellules en émission et une unique cellule en réception, ou d'activer simultanément plusieurs cellules en émission et plusieurs cellules en réception, ou encore d'activer simultanément une unique cellule en émission et plusieurs cellules en réception.

La figure 2 illustre un exemple d'un procédé de commande d'un dispositif d'émission radiofréquence du type décrit en relation avec la figure 1, lors d'une phase de test de l'état du dispositif ou de son environnement.

Le procédé de la figure 2 comprend une première étape 201 (STEP1) lors de laquelle le dispositif est commandé pour, simultanément :
- activer en émission une première cellule élémentaire de l'ensemble de n cellules C_i ;
- désactiver en émission une deuxième cellule élémentaire de l'ensemble de n cellules C_i ; et
- lire en sortie du détecteur de puissance 120 de la deuxième cellule un signal représentatif de la puissance radiofréquence reçue sur la borne de sortie S du circuit d'émission de la deuxième cellule.

Lors de cette étape, les autres cellules du dispositif peuvent être désactivées en émission et en réception.

Le procédé de la figure 2 comprend en outre, après l'étape 201, une étape 202 (STEP2) au cours de laquelle le signal lu à l'étape 201 en sortie du détecteur de puissance 120 de la deuxième cellule est analysé par un dispositif électronique de traitement, par exemple le circuit de contrôle 140 du dispositif 100, pour en déduire une information quant à l'état du dispositif 100 ou de son environnement. Lors de cette étape, le signal de sortie du détecteur de puissance 120 de la deuxième cellule peut par exemple être comparé à un ou plusieurs seuils prédéterminés.

Les étapes 201 et 202 peuvent être répétées pour différentes paires de cellules du dispositif, par exemple pour toutes les combinaisons de deux cellules du dispositif.

Pour améliorer la précision des informations déterminées, les étapes 201 et 202 peuvent être réitérées une pluralité de fois en modifiant à chaque itération la fréquence d'émission et/ou la puissance d'émission, de façon à balayer une pluralité de fréquences d'émission et/ou une pluralité de puissances d'émission distinctes.

A titre de variante, le procédé susmentionné peut être utilisé pour régler les paramètres d'émission, notamment la fréquence d'émission et/ou la puissance d'émission de la cellule activée en émission. A titre d'exemple, on peut prévoir de rechercher, par itérations successives, des réglages tendant vers l'obtention d'un rapport maximum entre la puissance détectée par le circuit de détection de puissance de la cellule désactivée en émission et la puissance émise par la cellule activée en émission.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, les modes de réalisation décrits ne se limitent pas à l'exemple particulier d'application décrit ci-dessus à un dispositif destiné à être utilisé pour irradier localement la peau d'un utilisateur, à des fins médicales ou de confort. Plus généralement, le fonctionnement décrit ci-dessus peut être adapté à tout dispositif comportant une pluralité de cellules d'émission radiofréquence élémentaires formant un réseau d'émission radiofréquence, par exemple pour des applications de communication, de radar ou d'imagerie.

Par ailleurs, les modes de réalisation décrits ne se limitent pas aux exemples de cellules élémentaires d'émission radiofréquence décrits en relation avec la figure 1. On notera en particulier qu'en fonction de l'application considérée, les mélangeurs 118 des circuits d'émission 110 des cellules de la figure 1 peuvent être omis, la sortie de l'oscillateur local 116 de chaque cellule étant alors directement connectée à l'entrée de l'amplificateur de puissance 114 de la cellule.

De plus, dans les exemples décrits ci-dessus, l'activation/la désactivation en émission d'une cellule élémentaire C_i peut être réalisée en jouant sur le signal de modulation appliqué sur l'entrée e2 du circuit d'émission 110 de la cellule. Les modes de réalisation décrits ne se limitent toutefois pas à ce cas particulier. Plus généralement, les cellules C_i peuvent être équipées de tout autre moyen d'activation/désactivation en émission commandables par l'intermédiaire du circuit de contrôle 140.

En outre, les modes de réalisation décrits ne se limitent pas aux exemples décrits dans lesquels le détecteur de puissance 120 de chaque cellule mesure la puissance radiofréquence sur la borne de sortie S de la cellule à partir de la seule mesure de la tension sur la borne S de la cellule. Plus généralement, tout circuit détecteur de puissance connu peut être utilisé pour mesurer la puissance radiofréquence sur la borne de sortie S de chaque cellule, par exemple un circuit basé sur des mesures de tension et de courant sur la borne S.

On a décrit ci-dessus principalement des exemples de réalisation dans lesquels on analyse un signal de sortie du détecteur de puissance d'une cellule désactivée en émission, lorsqu'une autre cellule est simultanément activée en émission, pour en déduire des informations sur l'état du dispositif d'émission ou de son environnement.

On notera cependant que des informations peuvent aussi être déduites de l'analyse du signal de sortie du détecteur de puissance d'une cellule activée en émission. En particulier, l'analyse d'un signal de sortie du détecteur de puissance 120 d'une cellule activée en émission peut permettre, par comparaison à des signaux de référence prédéterminés, par exemple des signaux mémorisés lors d'une phase préalable de calibration, d'obtenir des informations quant à l'environnement de cette cellule. Dans le cas d'un dispositif d'irradiation de la peau d'un utilisateur, l'analyse du signal de sortie du détecteur de puissance d'une cellule activée en émission peut par exemple permettre de déterminer si le dispositif est correctement appliqué contre la peau. Pour affiner la précision des informations déterminées, la mesure du signal de sortie du détecteur de puissance d'une cellule activée en émission peut être réitérée une pluralité de fois en commandant la cellule activée en émission pour balayer une pluralité de fréquences d'émission et/ou une pluralité de puissances d'émission distinctes.

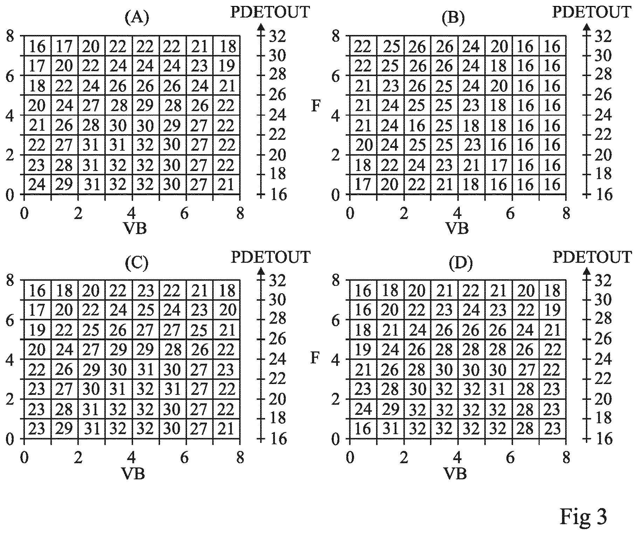

La figure 3 représente, à titre d'exemple illustratif, des signaux de sortie du détecteur de puissance d'une cellule activée en émission dans quatre configurations distinctes (A), (B), (C) et (D). Pour chacune des quatre configurations (A), (B), (C) et (D), on a représenté sur la figure 3 un diagramme représentant une puissance PDETOUT mesurée par le détecteur de puissance de la cellule, en fonction d'une fréquence d'émission F de la cellule (en ordonnée) et d'une tension de polarisation VB (en abscisse) de l'amplificateur de puissance 114 du circuit d'émission 110 de la cellule (étant entendu que, dans cet exemple, la tension de polarisation VB détermine la puissance d'émission de la cellule).

La configuration (A) de la figure 3 correspond à un cas dans lequel le dispositif d'émission est intègre et environné d'air. La configuration (B) de la figure 3 correspond à un cas dans lequel l'antenne 130 de la cellule d'émission considérée a été retirée. La configuration (C) de la figure 3 correspond à un cas dans lequel le dispositif d'émission est intègre et correctement appliqué contre la peau d'un utilisateur. La configuration (D) de la figure 3 correspond à un cas dans lequel le dispositif d'émission est intègre et appliqué contre une plaque métallique.

Comme cela apparaît sur la figure 3, on observe que la réponse du détecteur de puissance de la cellule varie en fonction des conditions d'utilisation du dispositif. En comparant la réponse du détecteur de puissance à des signatures de référence prédéterminées, par exemple générées par apprentissage lors d'une phase préalable de calibration, on peut déterminer dans quelles conditions se trouve le dispositif d'émission.

Une rétroaction peut être prévue pour adapter une consigne de fréquence et/ou de puissance d'émission du circuit 110 de la cellule, en fonction de la mesure de puissance fournie par son circuit détecteur de puissance 120.

Dans le cas d'un dispositif d'irradiation de la peau d'un utilisateur, l'analyse des signaux de sortie du détecteur de puissance d'une cellule activée en émission peut par ailleurs permettre de déterminer des informations quant à l'état émotionnel du sujet, qui influe sur la conductivité électrique de sa peau, tel que décrit notamment dans l'article intitulé "Human sweat ducts as helical antennas in the sub-THz frequency range-an overview" de A. Kochnev et al. (IEEE Transactions on Terahertz Science and Technology, Vol 11, N°2, Juin 2018).

## Revendications

1. Dispositif (100) d'émission radiofréquence comportant une pluralité de cellules élémentaires (C_i) comportant chacune un circuit d'émission (110) et une antenne (130) connectée à une borne de sortie (S) du circuit d'émission, chaque circuit d'émission (110) comportant un détecteur de puissance (120) spécifique à la cellule, ayant un noeud d'entrée relié à la borne de sortie (S) du circuit d'émission (110) de la cellule et un noeud de sortie (s1) spécifique à la cellule, le dispositif comportant en outre un circuit de contrôle (140) configuré pour, lors d'une phase de fonctionnement, mettre en oeuvre les étapes suivantes :
a) simultanément activer en émission une première cellule de ladite pluralité de cellules, désactiver en émission une deuxième cellule de ladite pluralité de cellules, et lire sur le noeud de sortie (s1) du détecteur de puissance (120) de la deuxième cellule un signal représentatif d'une puissance radiofréquence reçue sur la borne de sortie (S) de la deuxième cellule via l'antenne (130) de la deuxième cellule ; et
b) déduire du signal lu à l'étape a) une information quant à l'état du dispositif (100) ou de son environnement, dans lequel ladite information déduite à l'étape b) caractérise un transfert d'énergie entre les antennes des première et deuxième cellules.

2. Dispositif selon la revendication 1, dans lequel les noeuds de sortie (s1) des détecteurs de puissance (120) des différentes cellules élémentaires (C_i) sont isolés électriquement les uns des autres.

3. Dispositif (100) selon la revendication 1 ou 2, dans lequel le circuit de contrôle (140) est configuré pour, à l'étape b), comparer le signal lu à l'étape a) à un seuil prédéterminé.

4. Dispositif (100) selon l'une quelconque des revendications 1 à 3, dans lequel le circuit de contrôle (140) est configuré pour mettre en oeuvre, après l'étape a), l'étape suivante :
a') simultanément activer en émission la deuxième cellule, désactiver en émission la première cellule, et lire sur le noeud de sortie (s1) du détecteur de puissance (120) de la première cellule un signal représentatif d'une puissance radiofréquence reçue sur la borne de sortie (S) de la première cellule via l'antenne (130) de la première cellule.

5. Dispositif (100) selon la revendication 4, dans lequel le circuit de contrôle (140) est en outre configuré pour, après l'étape a'), comparer le signal lu à l'étape a') au signal lu à l'étape a).

6. Dispositif (100) selon l'une quelconque des revendications 1 à 5, dans lequel le circuit de contrôle (140) est configuré pour répéter les étapes a) et b) pour toutes les combinaisons de deux cellules (C_i) de ladite pluralité de cellules.

7. Dispositif (100) selon l'une quelconque des revendications 1 à 6, dans lequel, dans chaque cellule (C_i), le détecteur de puissance (120) est adapté à fournir sur son noeud de sortie (s1) un signal représentatif de la moyenne du carré de la tension présente sur la borne de sortie (S) du circuit d'émission (110) de la cellule.

8. Dispositif (100) selon l'une quelconque des revendications 1 à 7, dans lequel, dans chaque cellule (C_i), le circuit d'émission (110) comprend un générateur de signaux radiofréquence (112) et un amplificateur (114) reliant un noeud de sortie (n1) du générateur (112) à la borne de sortie (S) du circuit d'émission (110).

9. Dispositif (100) selon la revendication 8, dans lequel, dans chaque cellule (C_i), le générateur de signaux radiofréquence (112) comprend un oscillateur local (116) et un mélangeur adapté à moduler un signal de sortie de l'oscillateur local (116).

10. Dispositif (100) selon l'une quelconque des revendications 1 à 9, dans lequel les cellules (C_i) de ladite pluralité de cellules sont montées sur une même carte de circuit imprimé.

11. Procédé de commande d'un dispositif (100) d'émission radiofréquence comportant une pluralité de cellules élémentaires (C_i) comportant chacune un circuit d'émission (110) et une antenne (130) connectée à une borne de sortie (S) du circuit d'émission, chaque circuit d'émission (110) comportant un détecteur de puissance (120) spécifique à la cellule, ayant un noeud d'entrée relié à la borne de sortie (S) du circuit d'émission (110) de la cellule et un noeud de sortie (s1) spécifique à la cellule, le procédé comportant les étapes suivantes :
a) simultanément activer en émission une première cellule de ladite pluralité de cellules, désactiver en émission une deuxième cellule de ladite pluralité de cellules, et lire sur le noeud de sortie (s1) du détecteur de puissance (120) de la deuxième cellule un signal représentatif d'une puissance radiofréquence reçue par la borne de sortie (S) de la deuxième cellule via l'antenne (130) de la deuxième cellule ; et
b) déduire du signal lu à l'étape a) une information quant à l'état du dispositif (100) ou de son environnement, dans lequel ladite information déduite à l'étape b) caractérise un transfert d'énergie entre les antennes des première et deuxième cellules.

12. Procédé selon la revendication 11, dans lequel les noeuds de sortie (s1) des détecteurs de puissance (120) des différentes cellules élémentaires (C_i) sont isolés électriquement les uns des autres.

## Patentansprüche

1. Funkübertragungsvorrichtung (100), die eine Vielzahl von Elementarzellen (C_i) aufweist, die jeweils eine Übertragungsschaltung (110) und eine Antenne (130), die mit einem Ausgangsanschluss (S) der Übertragungsschaltung verbunden ist, aufweisen, wobei jede Übertragungsschaltung (110) einen Leistungsdetektor (120) aufweist, der für die Zelle spezifisch ist, mit einem Eingangsknoten, der mit dem Ausgangsanschluss (S) der Zellübertragungsschaltung (110) gekoppelt ist, und einen Ausgangsknoten (s1), der für die Zelle spezifisch ist, wobei die Vorrichtung ferner eine Steuerschaltung (140) aufweist, die konfiguriert ist, während einer Betriebsphase die folgenden Schritte zu implementieren:
a) gleichzeitiges Aktivieren bei Übertragung einer ersten Zelle der Vielzahl von Zellen, Deaktivieren bei Übertragung einer zweiten Zelle der Vielzahl von Zellen und Lesen aus dem Ausgangsknoten (s1) des Leistungsdetektors (120) der zweiten Zelle eines Signals, das für eine Funkfrequenzleistung repräsentativ ist, die am Ausgangsanschluss (S) der zweiten Zelle über die Antenne (130) der zweiten Zelle empfangen wird; und
b) Ableiten aus dem Signal, das in Schritt a) gelesen wurde, von Information in Bezug auf den Zustand der Vorrichtung (100) oder ihrer Umgebung,
wobei die Information, die im Schritt b) abgeleitet wurde, eine Leistungsübertragung zwischen den Antennen der ersten und zweiten Zelle charakterisiert.

2. Vorrichtung nach Anspruch 1, wobei die Ausgangsknoten (s1) der Leistungsdetektoren (120) der verschiedenen Elementarzellen (C_i) elektrisch voneinander isoliert sind.

3. Vorrichtung (100) nach Anspruch 1 oder 2, wobei die Steuerschaltung (140) konfiguriert ist zum Vergleichen, in Schritt b), des Signals, das in Schritt a) gelesen wurde, mit einem vorgegebenen Schwellenwert.

4. Vorrichtung (100) nach einem der Ansprüche 1 bis 3, wobei die Steuerschaltung (140) konfiguriert ist, zum Implementieren, nach Schritt a), des folgenden Schritts:
a') gleichzeitiges Aktivieren bei Übertragung der zweiten Zelle, Deaktivieren bei Übertragung der ersten Zelle und Lesen vom Ausgangsknoten (s1) des Leistungsdetektors (120) der ersten Zelle eines Signals, das für eine Funkfrequenzleistung repräsentativ ist, die am Ausgangsanschluss (S) der ersten Zelle über die Antenne (130) der ersten Zelle empfangen wird.

5. Vorrichtung (100) nach Anspruch 4, wobei die Steuerschaltung (140) ferner konfiguriert ist, zum Vergleichen, nach Schritt a'), des Signals, das in Schritt a') gelesen wurde, mit dem Signal das in Schritt a) gelesen wurde.

6. Vorrichtung (100) nach einem der Ansprüche 1 bis 5, wobei die Steuerschaltung (140) konfiguriert ist, zum Wiederholen der Schritte a) und b) für alle Kombinationen von zwei Zellen (C_i) der Vielzahl von Zellen.

7. Vorrichtung (100) nach einem der Ansprüche 1 bis 6, wobei in jeder Zelle (C_i) der Leistungsdetektor (120) eingerichtet ist, zum Liefern, an seinem Ausgangsknoten (s1), eines Signals, das für den Durchschnitt des Quadrats der Spannung repräsentativ ist, die am Ausgangsanschluss (S) der Übertragungsschaltung (110) der Zelle anliegt.

8. Vorrichtung (100) nach einem der Ansprüche 1 bis 7, wobei in jeder Zelle (C_i) die Übertragungsschaltung (110) einen Funkfrequenz-Signalgenerator (112) und einen Verstärker (114) aufweist, der einen Ausgangsknoten (n1) des Generators (112) mit dem Ausgangsanschluss (S) der Übertragungsschaltung (110) verbindet.

9. Vorrichtung (100) nach Anspruch 8, wobei in jeder Zelle (C_i) der Funkfrequenz-Signalgenerator (112) einen lokalen Oszillator (116) und einen Mischer aufweist, der eingerichtet ist zum Modulieren eines Ausgangssignals des lokalen Oszillators (116).

10. Vorrichtung (100) nach einem der Ansprüche 1 bis 9, wobei die Zellen (C_i) der Vielzahl von Zellen auf einer gleichen Leiterplatte montiert sind.

11. Verfahren zur Steuerung einer Funkübertragungsvorrichtung (100), die eine Vielzahl von Elementarzellen (C_i) aufweist, von denen jede eine Übertragungsschaltung (110) und eine Antenne (130) aufweist, die mit einem Ausgangsanschluss (S) der Übertragungsschaltung verbunden ist, wobei jede Übertragungsschaltung (110) einen Leistungsdetektor (120) aufweist, der für die Zelle spezifisch ist mit einem Eingangsknoten, der mit dem Ausgangsanschluss (S) der Übertragungsschaltung (110) gekoppelt ist, und einen Ausgangsknoten (s1), der für die Zelle spezifisch ist, wobei das Verfahren die folgenden Schritte aufweist:
a) gleichzeitiges Aktivieren bei Übertragung einer ersten Zelle der Vielzahl von Zellen, Deaktivieren bei Übertragung einer zweiten Zelle der Vielzahl von Zellen und Lesen aus dem Ausgangsknoten (s1) des Leistungsdetektors (120) der zweiten Zelle eines Signals, das für eine Funkfrequenzleistung repräsentativ ist, die am Ausgangsanschluss (S) der zweiten Zelle über die Antenne (130) der zweiten Zelle empfangen wird; und
b) Ableiten aus dem Signal, das in Schritt a) gelesen wurde, von Information in Bezug auf den Zustand der Vorrichtung (100) oder ihrer Umgebung,
wobei die Information, die im Schritt b) abgeleitet wurde, eine Leistungsübertragung zwischen den Antennen der ersten und zweiten Zelle charakterisiert.

12. Verfahren nach Anspruch 11, wobei die Ausgangsknoten (s1) der Leistungsdetektoren (120) der verschiedenen Elementarzellen (C_i) elektrisch voneinander isoliert sind.

## Claims

1. Radio transmission device (100) comprising a plurality of elementary cells (C_i), each comprising a transmit circuit (110) and an antenna (130) connected to an output terminal (S) of the transmit circuit, each transmit circuit (110) comprising a power detector (120) specific to the cell, having an input node coupled to the output terminal (S) of the cell transmit circuit (110), and an output node (s1) specific to the cell, the device further comprising a control circuit (140) configured to, during an operating phase, implement the steps of:
a) simultaneously activating in transmit mode a first cell of said plurality of cells, deactivating in transmit mode a second cell of said plurality of cells, and reading from the output node (s1) of the power detector (120) of the second cell a signal representative of a radio frequency power received on the output terminal (S) of the second cell via the antenna (130) of the second cell; and
b) deducing from the signal read at step a) information relative to the state of the device (100) or of its environment,
wherein said information deduced at step b) characterizes a power transfer between the antennas of the first and second cells.

2. Device according to claim 1, wherein the output nodes (s1) of the power detectors (120) of the different elementary cells (C_i) are electrically insulated from one another.

3. Device (100) according to claim 1 or 2, wherein the control circuit (140) is configured to, at step b), compared the signal read at step a) with a predetermined threshold.

4. Device (100) according to any of claims 1 to 3, wherein the control circuit (140) is configured to implement, after step a), the step of:
a') simultaneously activating in transmit mode the second cell, deactivating in transmit mode the first cell, and reading from the output node (s1) of the power detector (120) of the first cell a signal representative of a radio frequency power received on the output terminal (S) of the first cell via the antenna (130) of the first cell.

5. Device (100) according to claim 4, wherein the control circuit (140) is further configured to, after step a'), compare the signal read at step a') with the signal read at step a).

6. Device (100) according to any of claims 1 to 5, wherein the control circuit (140) is configured to repeat steps a) and b) for all the combinations of two cells (C_i) of said plurality of cells.

7. Device (100) according to any of claims 1 to 6, wherein, in each cell (C_i), the power detector (120) is adapted to delivering on its output node (s1) a signal representative of the average of the square of the voltage present on the output terminal (S) of the transmit circuit (110) of the cell.

8. Device (100) according to any of claims 1 to 7, wherein, in each cell (C_i), the transmit circuit (110) comprises a radio frequency signal generator (112) and an amplifier (114) coupling an output node (n1) of the generator (112) to the output terminal (S) of the transmit circuit (110).

9. Device (100) according to claim 8, wherein in each cell (C_i), the radio frequency signal generator (112) comprises a local oscillator (116) and a mixer adapted to modulating an output signal of the local oscillator (116).

10. Device (100) according to any of claims 1 to 9, wherein the cells (C_i) of said plurality of cells are assembled on a same printed circuit board.

11. Method of controlling a radio transmission device (100) comprising a plurality of elementary cells (C_i), each comprising a transmit circuit (110) and an antenna (130) connected to an output terminal (S) of the transmit circuit, each transmit circuit (110) comprising a power detector (120) specific to the cell, having an input node coupled to the output terminal (S) of the transmit circuit (110) of the cell and an output node (s1) specific to the cell, the method comprising the steps of:
a) simultaneously activating in transmit mode a first cell of said plurality of cells, deactivating in transmit mode a second cell of said plurality of cells, and reading from the output node (s1) of the power detector (120) of the second cell a signal representative of a radio frequency power received by the output terminal (S) of the second cell via the antenna (130) of the second cell; and
b) deducing from the signal read at step a) information relative to the state of the device (100) or of its environment,
wherein said information deduced at step b) characterizes a power transfer between the antennas of the first and second cells.

12. Method according to claim 11, wherein the output nodes (s1) of the power detectors (120) of the different elementary cells (C_i) are electrically insulated from one another.
